# EUROPEAN PATENT APPLICATION

(11) **EP 4 834 707 A1**
(43) Date of publication of application: **04.11.2026**
(21) Application number: 24911610.4
(22) Date of filing: 30.12.2024
(51) Int. Cl.: B62B 7/12

(54) **MULTIFUNCTIONAL CARRYING VEHICLE**

(30) Priority: 29.12.2023 CN 202311846615
(71) Applicant: Goodbaby Child Products Co., Ltd., Kunshan, Jiangsu 215331 (CN)
(72) Inventor: LI, Zhaoguo, Suzhou, Jiangsu 215331 (CN); GAO, Xiang, Suzhou, Jiangsu 215331 (CN); YOU, Zhigang, Suzhou, Jiangsu 215331 (CN)
(74) Representative: Murgitroyd & Company
(86) International application number: PCT/CN2024/143680
(87) International publication number: WO 2025/140696

(57) **Abstract**

A multifunctional carrying vehicle, comprising a chassis (1) and a framing assembly (2) arranged on the chassis (1). The carrying vehicle has a first usage state and a second usage state. When the carrying vehicle is in the first usage state, the framing assembly (2) is located above the chassis (1) and encloses an accommodation space with the chassis (1); and when the carrying vehicle is in the second usage state, at least part of the framing assembly (2) is moved to be arranged side by side with the chassis (1) and forms, together with the chassis (1), a carrying structure for supporting. When the multifunctional carrying vehicle is in the first usage state, the carrying vehicle can travel while carrying a child and carrying cargo in the accommodation space, which makes it easier for an adult to go outside, and the carrying vehicle has a small structure and volume, and is thus easy to use. When the carrying vehicle is in the second usage state, the carrying vehicle is used in a static state, and the carrying space of the carrying vehicle is increased compared with that in the first usage state, so that the carrying vehicle can be used as a bed, etc. The carrying vehicle has multiple usage functions,

## Description

### TECHNICAL FIELD

The present invention relates specifically to a multifunctional carrier.

### BACKGROUND

Carriers such as wagons are typically used for carrying children and loading goods when going out. In the prior art, a wagon is generally used only as a wagon, making the function of the wagon single. For example, Chinese patent ZL2007200466261 discloses a children's wagon, comprising a wagon frame, side wheels respectively disposed on both sides under the wagon frame, a tow bar disposed on a front portion of the wagon frame, and a shielding body disposed on the wagon frame; the wagon frame comprises a chassis, side brackets disposed on both sides above the chassis, and a cross rod connected between the side brackets on both sides; a seat is disposed on the chassis.

### SUMMARY

The object of the present invention is to address the deficiencies in the prior art and to provide a multifunctional carrier having multiple use functions.

To achieve the above object, the technical solution adopted by the present invention is as follows:
A multifunctional carrier, comprising a chassis and an enclosing frame assembly disposed on the chassis; the carrier has a first use state and a second use state; when the carrier is in the first use state, the enclosing frame assembly is located above the chassis and, together with the chassis, encloses an accommodation space; when the carrier is in the second use state, at least part of the enclosing frame assembly is moved to be juxtaposed with the chassis and, together with the chassis, forms a load-bearing structure for support.

In some embodiments, the enclosing frame assembly is rotatably mounted on an end portion of the chassis, the enclosing frame assembly is entirely rotatable relative to the chassis, and after being rotated, a side edge of the enclosing frame assembly is rotated to a position juxtaposed with the chassis.

In some embodiments, the enclosing frame assembly is rotatably mounted on the rear end of the chassis and has a rear enclosing frame; in the second use state, the rear enclosing frame is rotated to connect with the plane in which the chassis is located so as to serve as an outward extension of the chassis.

In some embodiments, the multifunctional carrier further has a support structure disposed on the enclosing frame assembly; in the second use state, the support structure is supported between the ground and the frame assembly.

In some embodiments, the support structure is disposed at a position close to the top of the enclosing frame assembly.

In some embodiments, in the first use state, at least part of the support structure extends to a rear side of the enclosing frame assembly so as to form a handle for pushing the multifunctional carrier.

In some embodiments, the support structure is rotatably mounted on the enclosing frame assembly so as to adjust an inclination angle of the rear enclosing frame relative to the chassis in the second use state, and to adjust a position of the handle in the first use state.

In some embodiments, the carrier further comprises a seat assembly disposed in the accommodation space of the enclosing frame assembly when the carrier is in the first use state;
the seat assembly comprises a first seat assembly, the first seat assembly comprises a first backrest disposed on the enclosing frame assembly; when the carrier is in the second use state, the first backrest extends along the plane in which the chassis is located, and is sequentially connected with the chassis.

In some embodiments, the enclosing frame assembly comprises a rear enclosing frame having a frame structure, the frame structure comprises a pair of upright rod assemblies and a cross rod connected between the pair of upright rod assemblies, the first backrest comprises a flexible connecting member disposed between the pair of upright rod assemblies, and the flexible connecting member is a fabric cover.

In some embodiments, the seat assembly further comprises a second seat assembly, and the second seat assembly is rotatably and detachably disposed on the chassis; or, the second seat assembly is detachably disposed on the chassis.

In some embodiments, the second seat assembly comprises a second seat and a second backrest whose lower portion is rotatably connected to the second seat, and the second seat is rotatably and detachably, or detachably, connected to the chassis;
when the carrier is in the first use state, orientations of the first seat assembly and the second seat assembly are the same or opposite.

In some embodiments, the carrier further comprises a front enclosing rod assembly rotatably disposed on the enclosing frame assembly; when the carrier is in the first use state, the front enclosing rod assembly is rotatable to a closed position in which it is brought close to the enclosing frame assembly, and in the closed position, the front enclosing rod assembly shields the front of the accommodation space of the carrier; the front enclosing rod assembly is rotatable to an open position, and in the open position, the front enclosing rod assembly is rotated in a direction of opening the accommodation space.

In some embodiments, the front enclosing rod assembly is further arranged to be slidable relative to the enclosing frame assembly; when the carrier is in the first use state, the front enclosing rod assembly cannot slide relative to the enclosing frame assembly; when the carrier is in the second use state and the enclosing frame assembly has been entirely rotated to a position behind the chassis, the front enclosing rod assembly slides forward relative to the enclosing frame assembly to extend outside the enclosing frame assembly, and shields above the chassis.

In some embodiments, the carrier further comprises a front enclosing rod assembly slidably disposed on the enclosing frame assembly; when the carrier is in the first use state, the front enclosing rod assembly is capable of sliding relative to the enclosing frame assembly so as to open or close the front of the accommodation space of the carrier; when the carrier is in the second use state and the enclosing frame assembly has been entirely rotated to a position behind the chassis, the front enclosing rod assembly slides forward relative to the enclosing frame assembly to extend outside the enclosing frame assembly, and shields above the chassis.

In some embodiments, the enclosing frame assembly comprises a lower enclosing rod assembly, a front bracket assembly, an upper upright rod assembly, and a lower upright rod assembly; one end portion of the lower enclosing rod assembly is rotatably connected to a rear portion of the chassis, the other end portion of the lower enclosing rod assembly is detachably connected to a front portion of the chassis; one end portion of the front bracket assembly is rotatably connected to the other end portion of the lower enclosing rod assembly, the other end portion of the front bracket assembly is rotatably connected to an upper end portion of the upper upright rod assembly; a lower end portion of the upper upright rod assembly is rotatably connected to an upper end portion of the lower upright rod assembly, a lower end portion of the lower upright rod assembly is rotatably connected to the one end portion of the lower enclosing rod assembly; when the carrier is in the first use state, the other end portion of the lower enclosing rod assembly and the front portion of the chassis are in a connected state; when the carrier is in the second use state, the connection between the other end portion of the lower enclosing rod assembly and the front portion of the chassis is released, and the enclosing frame assembly is entirely rotated to a position behind the chassis.

In some embodiments, the enclosing frame assembly comprises a front bracket assembly, an upper upright rod assembly, and a lower upright rod assembly; one end portion of the front bracket assembly is rotatably connected to a front portion of the chassis, and the connection between the front bracket assembly and the front portion of the chassis is detachable; the other end portion of the front bracket assembly is rotatably connected to an upper end portion of the upper upright rod assembly, a lower end portion of the upper upright rod assembly is rotatably connected to an upper end portion of the lower upright rod assembly, and a lower end portion of the lower upright rod assembly is rotatably connected to a rear portion of the chassis; when the carrier is in the first use state, the one end portion of the front bracket assembly and the front portion of the chassis are in a connected state; when the carrier is in the second use state, the connection between the front bracket assembly and the front portion of the chassis is released, and the enclosing frame assembly is entirely rotated to a position behind the chassis.

In some embodiments, the carrier further comprises a front wheel assembly disposed on a bottom front portion of the chassis and a rear wheel assembly disposed on a bottom rear portion of the chassis.

The present invention further provides a multifunctional carrier, comprising a chassis, an enclosing frame assembly disposed on the chassis and having an accommodation space, and a third seat assembly; the third seat assembly comprises a third seat connected to a rear portion of the chassis and a third backrest rotatably connected to the third seat; the carrier has a first use state and a second use state; when the carrier is in the first use state, the third backrest extends in an up-down direction, and the third backrest is located in the accommodation space of the enclosing frame assembly; when the carrier is in the second use state, the third backrest is rotated relative to the seat to a position outside the accommodation space of the enclosing frame assembly and is located behind the chassis.

Thanks to the application of the above technical solutions, the present invention has the following advantages compared with the prior art: when the multifunctional carrier of the present invention is in the first use state, children can be carried and goods can be loaded in the accommodation space of the carrier and transported, thereby making it easy and labor-saving for adults when going out, and the structural volume of the carrier is relatively small, which facilitates the use of the carrier. When the carrier is in the second use state, the carrier is used at rest, and relative to the first use state, the load-bearing space of the carrier is enlarged, so that it can be used as other articles such as a bed. This enables the carrier to have multiple use functions, which can greatly improve the utilization rate of the carrier, thereby avoiding waste.

### BRIEF DESCRIPTION OF THE DRAWINGS

FIG. 1 is a perspective schematic view of the multifunctional carrier of Embodiment 1 in the first use state (the second seat assembly and the first seat assembly are simultaneously disposed in the enclosing frame assembly, and the second seat assembly is rotatably and detachably connected to the chassis);
FIG. 2 is a side schematic view corresponding to the state of FIG. 1;
FIG. 3 is a perspective schematic view of the multifunctional carrier of Embodiment 1 in the first use state (the second seat assembly and the first seat assembly are simultaneously disposed in the enclosing frame assembly, and the second seat assembly is only detachably connected to the chassis);
FIG. 4 is a side schematic view corresponding to the state of FIG. 3;
FIG. 5 is a perspective schematic view of the multifunctional carrier of Embodiment 1 in the first use state (two second seat assemblies are simultaneously disposed in the enclosing frame assembly, both of the two second seat assemblies being rotatably and detachably connected to the chassis);
FIG. 6 is a side schematic view corresponding to the state of FIG. 5;
FIG. 7 is a perspective schematic view of the multifunctional carrier of Embodiment 1 in the first use state (two second seat assemblies are simultaneously disposed in the enclosing frame assembly, one of the second seat assemblies being rotatably and detachably connected to the chassis and the first seat assembly, and the other second seat assembly being only detachably connected to the chassis);
FIG. 8 is a side schematic view corresponding to the state of FIG. 7;
FIG. 9 is a perspective schematic view of the multifunctional carrier of Embodiment 1 in the first use state (two second seat assemblies are simultaneously disposed in the enclosing frame assembly, one of the second seat assemblies being rotatably and detachably connected to the chassis, and the other second seat assembly being only detachably connected to the chassis);
FIG. 10 is a side schematic view corresponding to the state of FIG. 9;
FIG. 11 is a perspective schematic view of the multifunctional carrier of Embodiment 1 in the first use state (two second seat assemblies are simultaneously disposed in the enclosing frame assembly, both of the two second seat assemblies being only detachably connected to the chassis);
FIG. 12 is a side schematic view corresponding to the state of FIG. 11;
FIG. 13 is a side schematic view of the multifunctional carrier of Embodiment 1 in the first use state (only one second seat assembly is disposed in the enclosing frame assembly, and the second seat assembly is arranged in a forward direction);
FIG. 14 is a side schematic view of the multifunctional carrier of Embodiment 1 in the first use state (only one second seat assembly is disposed in the enclosing frame assembly, and the second seat assembly is arranged in a reverse direction);
FIG. 15 is a side schematic view of the multifunctional carrier of Embodiment 1 in the first use state (two second seat assemblies are disposed in the enclosing frame assembly, and both of the two second seat assemblies are arranged in a forward direction);
FIG. 16 is a side schematic view of the multifunctional carrier of Embodiment 1 in the first use state (two second seat assemblies are disposed in the enclosing frame assembly, one of the second seat assemblies is arranged in a forward direction, and the other second seat assembly is arranged in a reverse direction);
FIG. 17 is a side schematic view of the multifunctional carrier of Embodiment 1 in the first use state (two second seat assemblies are disposed in the enclosing frame assembly, one of the second seat assemblies is arranged in a forward direction, and the other second seat assembly is arranged in a reverse direction);
FIG. 18 is a side schematic view of the multifunctional carrier of Embodiment 1 in the first use state (two second seat assemblies are disposed in the enclosing frame assembly, and both of the two second seat assemblies are arranged in a reverse direction);
FIG. 19 is a perspective schematic view of the multifunctional carrier of Embodiment 1 in the first use state (the front enclosing rod assembly is moved away from the front bracket assembly to open the front of the accommodation space);
FIG. 20 is a side schematic view corresponding to the state of FIG. 19;
FIG. 21 is a perspective schematic view of the multifunctional carrier of Embodiment 1 in the first use state (the front portion of the chassis is connected with a tow bar);
FIG. 22 is a side schematic view corresponding to the state of FIG. 21;
FIG. 23 is a perspective schematic view of the multifunctional carrier of Embodiment 1 in the second use state;
FIG. 24 is a side schematic view of the multifunctional carrier of Embodiment 1 in the second use state;
FIG. 25 is a perspective schematic view of the multifunctional carrier of Embodiment 1 during transition from the first use state to the second use state (after the enclosing frame assembly is rotated rearward relative to the chassis);
FIG. 26 is a side schematic view corresponding to the state of FIG. 25;
FIG. 27 is a perspective schematic view of the multifunctional carrier of Embodiment 1 during transition from the first use state to the second use state (after the second seat assembly is detached from the chassis);
FIG. 28 is a side schematic view corresponding to the state of FIG. 27;
FIG. 29 is a perspective schematic view of the multifunctional carrier of Embodiment 1 during folding;
FIG. 30 is a side schematic view of the multifunctional carrier of Embodiment 1 during folding;
FIG. 31 is a perspective schematic view of the multifunctional carrier of Embodiment 1 in a folded state;
FIG. 32 is a side schematic view of the multifunctional carrier of Embodiment 1 in the folded state;
FIG. 33 is an exploded schematic view of the multifunctional carrier of Embodiment 1;
FIG. 34 is a perspective schematic view of the multifunctional carrier of Embodiment 5 in the second use state; and
FIG. 35 is a side schematic view of the multifunctional carrier of Embodiment 5 in the second use state.

Wherein: 1, chassis; 2, enclosing frame assembly; 21, lower enclosing rod assembly; 22, front bracket assembly; 23, upper upright rod assembly; 24, lower upright rod assembly; 31, first seat assembly; 311, first backrest; 312, first seat; 32, second seat assembly; 321, second seat; 322, second backrest; 33, third seat assembly; 331, third seat; 332, third backrest; 4, front enclosing rod assembly; 5, support structure; 6, tow bar; 7, front wheel assembly; 8, rear wheel assembly.

### DETAILED DESCRIPTION

The technical solutions of the present invention will be further elaborated below with reference to the drawings and specific embodiments.

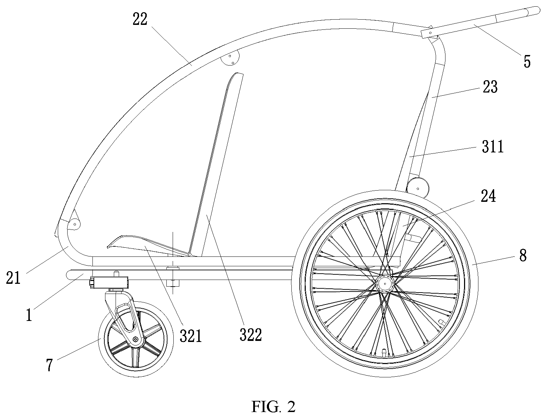

In the following description, the directions referred to, such as "front", "rear", "left", "right", "upper" and "lower", are all defined according to FIG. 2, wherein the left side in the figure is "front", the right side is "rear", the upper side is "upper", and the lower side is "lower", and the directions perpendicular to the paper in the figure are "left" and "right". The above definitions of directions are merely for the convenience of describing the present invention and simplifying the description, and do not indicate or imply that the referred device or element must have a specific orientation or be constructed and operated in a specific orientation, and therefore cannot be understood as a limitation on the present invention.

### Embodiment 1

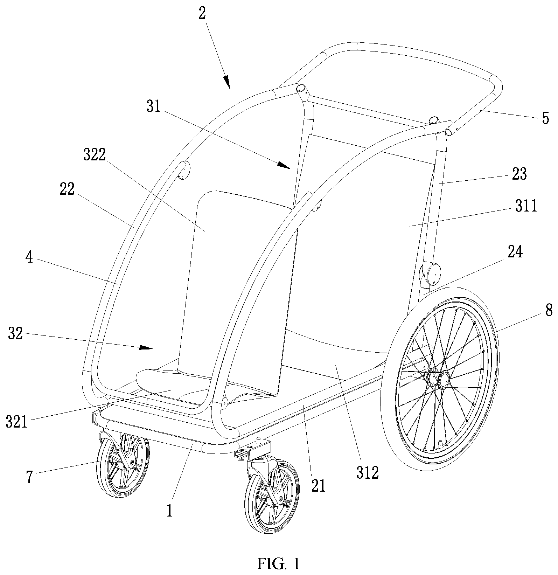

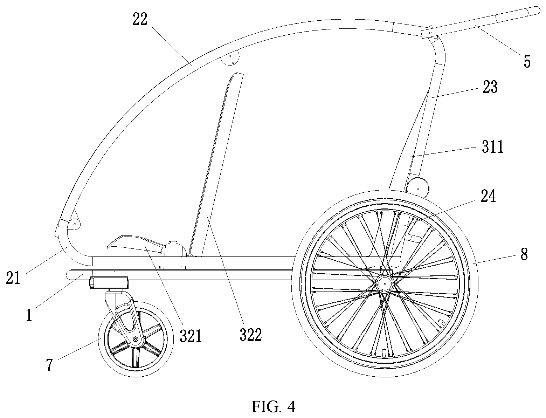

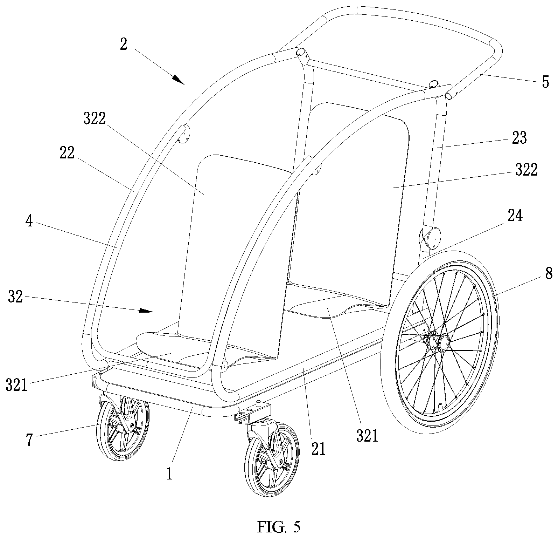

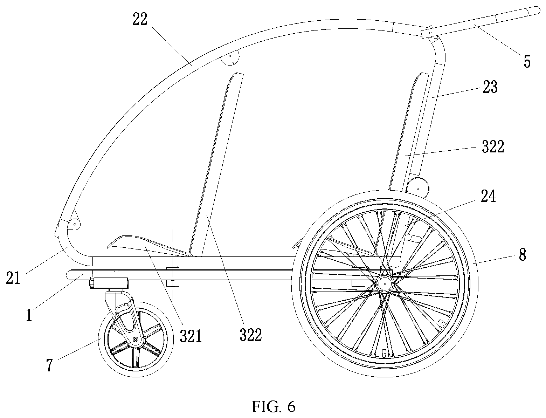

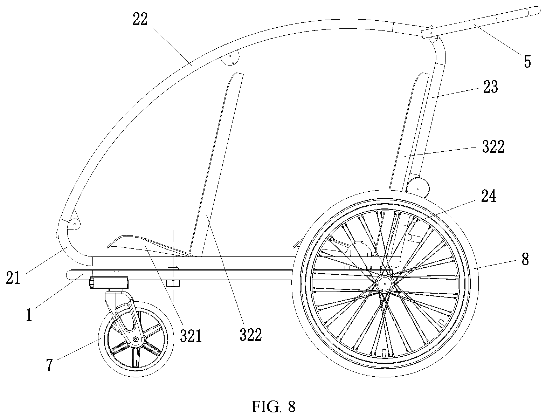

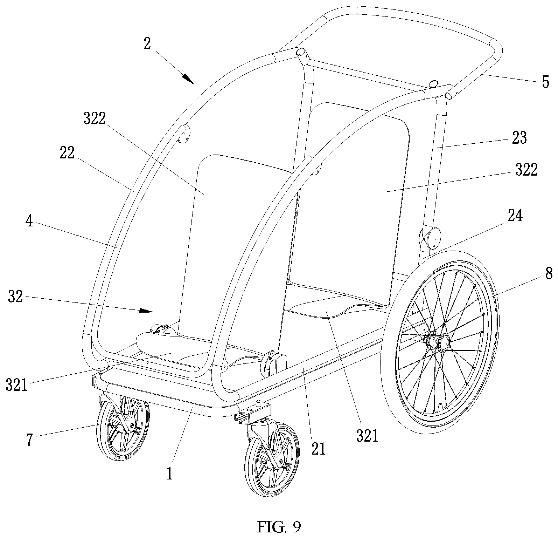

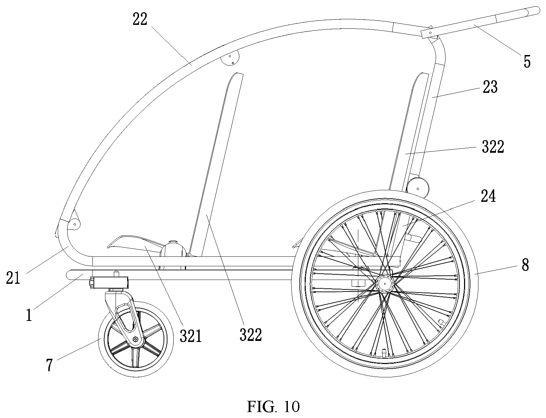

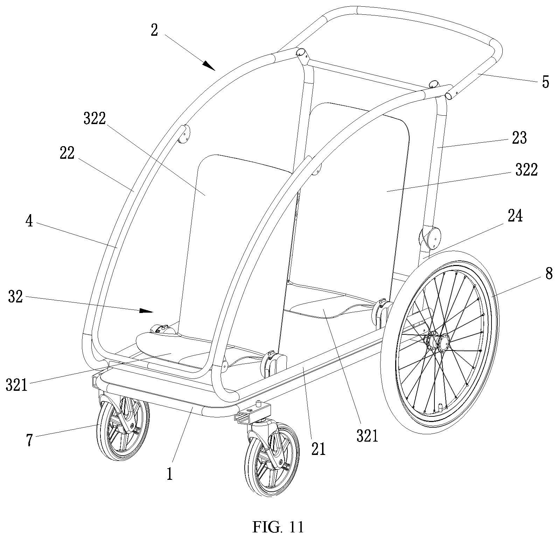

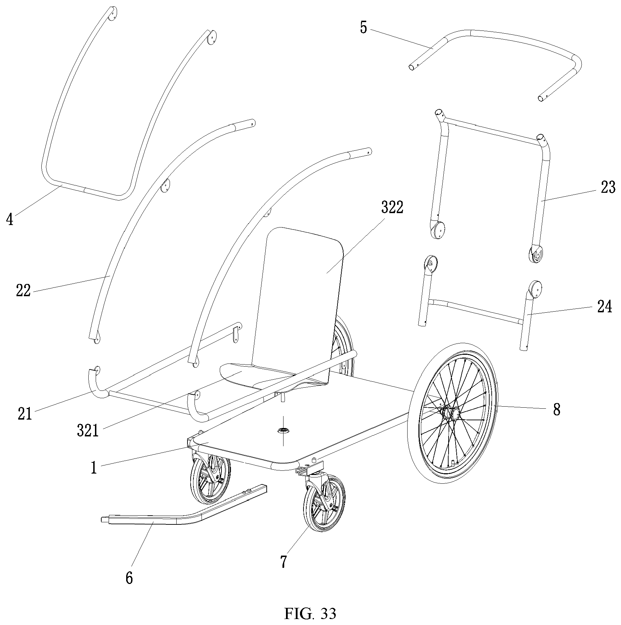

As shown in FIGS. 1 to 33, the multifunctional carrier of the present invention comprises a chassis 1, an enclosing frame assembly 2 disposed on the chassis 1, a front wheel assembly 7 disposed on a bottom front portion of the chassis 1, and a rear wheel assembly 8 disposed on a bottom rear portion of the chassis 1.

The enclosing frame assembly 2 is movably disposed on the chassis 1, such that the enclosing frame assembly 2 is movable relative to the chassis 1 so that the carrier has at least a first use state and a second use state.

When the carrier is in the first use state, the enclosing frame assembly 2 is located above the chassis 1 and, together with the chassis 1, encloses an accommodation space for carrying a child. When the carrier is in the second use state, at least part of the enclosing frame assembly 2 is moved to be juxtaposed with the chassis 1 and, together with the chassis 1, forms a load-bearing structure for support.

In this embodiment, the enclosing frame assembly 2 is rotatably mounted on an end portion of the chassis 1, the enclosing frame assembly 2 is entirely rotatable relative to the chassis 1, and after being rotated, the enclosing frame assembly 2 is rotated to a position juxtaposed with the chassis 1.

Specifically, one end portion of the enclosing frame assembly 2 is rotatably connected to a rear portion of the chassis 1, and the other end portion of the enclosing frame assembly 2 is detachably connected to a front portion of the chassis 1. When the connection between the other end portion of the enclosing frame assembly 2 and the front portion of the chassis 1 is released, the enclosing frame assembly 2 is entirely rotatable rearward relative to the chassis 1 to a position juxtaposed with the chassis 1.

This embodiment provides a specific structure of the enclosing frame assembly 2. Specifically, as shown in FIGS. 1 to 33, the enclosing frame assembly 2 comprises a lower enclosing rod assembly 21, a front bracket assembly 22, and an upright rod assembly, and the upright rod assembly comprises an upper upright rod assembly 23 and a lower upright rod assembly 24. One end portion of the lower enclosing rod assembly 21 is rotatably connected to the rear portion of the chassis 1, and the other end portion of the lower enclosing rod assembly 21 is detachably connected to the front portion of the chassis 1. One end portion of the front bracket assembly 22 is rotatably connected to the other end portion of the lower enclosing rod assembly 21, and the other end portion of the front bracket assembly 22 is rotatably connected to an upper end portion of the upper upright rod assembly 23. A lower end portion of the upper upright rod assembly 23 is rotatably connected to an upper end portion of the lower upright rod assembly 24, and a lower end portion of the lower upright rod assembly 24 is rotatably connected to the one end portion of the lower enclosing rod assembly 21. In this way, a four-bar linkage mechanism is formed among the lower enclosing rod assembly 21, the front bracket assembly 22, the upper upright rod assembly 23 and the lower upright rod assembly 24, and the respective rod members constituting the four-bar linkage mechanism are rotatable relative to one another, so that the enclosing frame assembly 2 has an unfolded state and a folded state, and can be switched between the unfolded state and the folded state.

The upright rod assemblies are respectively disposed on the left and right sides of the enclosing frame assembly 2, and a cross rod is further disposed between the upright rod assemblies on the left and right sides, and the upright rod assemblies on the left and right sides together with the cross rod form a rear enclosing frame of the enclosing frame assembly 2.

When the carrier is in the first use state, the enclosing frame assembly 2 is entirely located above the chassis 1, and the other end portion of the enclosing frame assembly 2 and the front portion of the chassis 1 are in a connected state, as shown in FIGS. 1 to 22. At this time, the carrier is used as a wagon, and the accommodation space of the carrier may be used for seating a child or for placing articles.

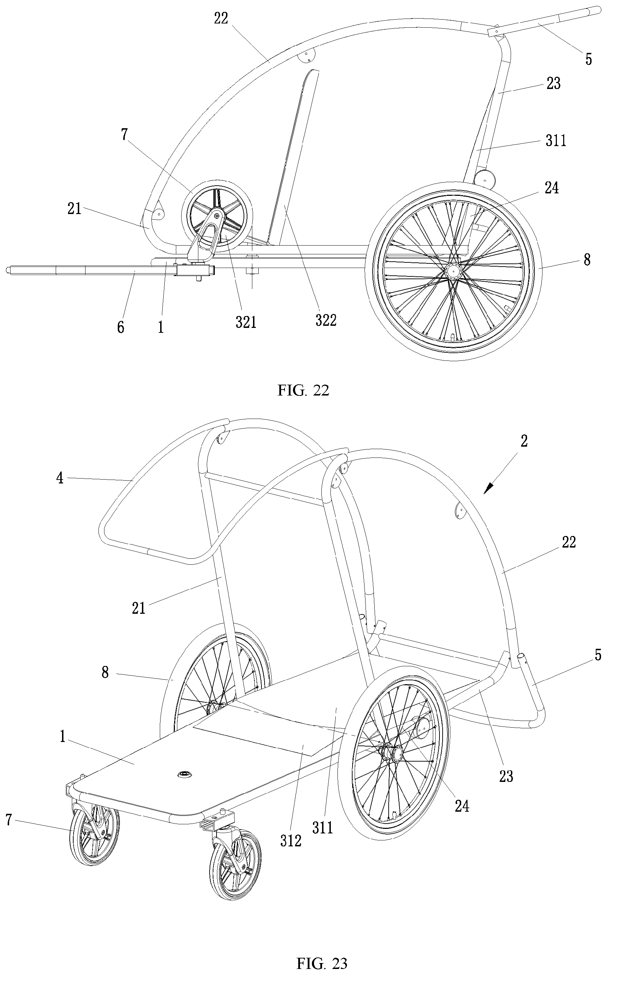

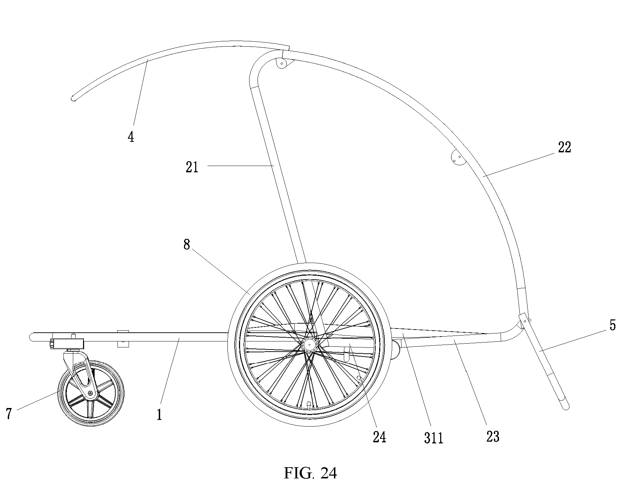

When the carrier is in the second use state, the connection between the other end portion of the enclosing frame assembly 2 and the front portion of the chassis 1 is released, and the enclosing frame assembly 2 is entirely rotated relative to the chassis 1 to a position behind the chassis 1, at which time the rear enclosing frame of the enclosing frame assembly 2 is rotated to connect with the plane in which the chassis 1 is located, so as to serve as an outward extension of the chassis 1, as shown in FIGS. 23 and 24. At this time, the carrier is used as a bed or a tent, and the chassis 1 together with the accommodation space of the carrier jointly form a space for lying or sitting.

When the carrier is in the first use state, a seat assembly may be disposed in the accommodation space of the carrier for a child to sit on. At least one seat assembly may be provided.

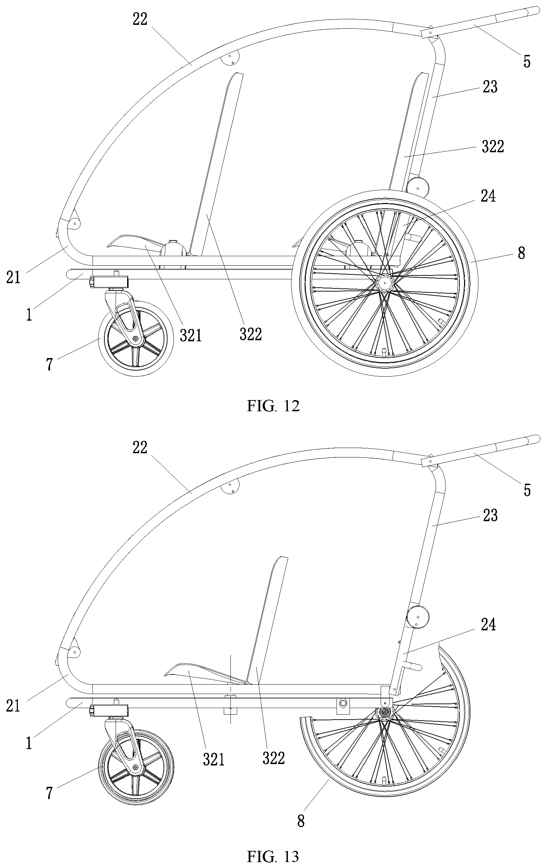

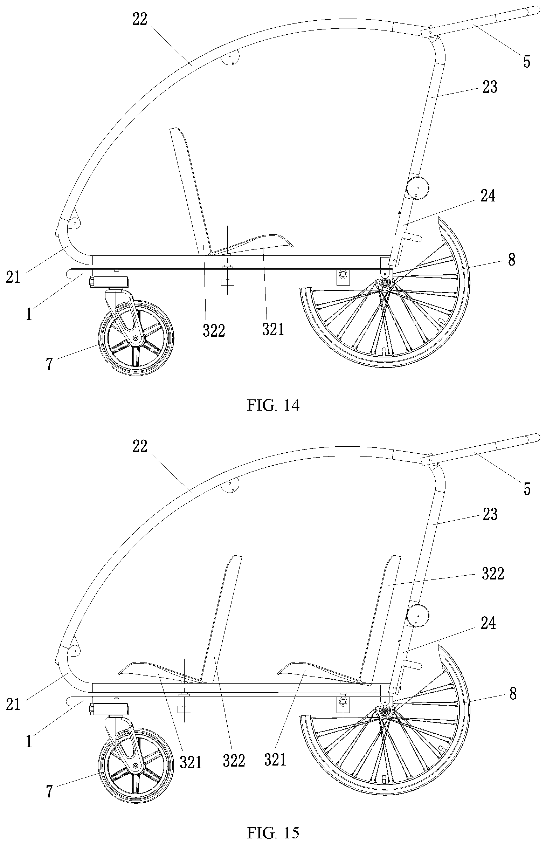

Generally, one or two seat assemblies are provided. When one seat assembly is provided, the carrier is a single-seat wagon, as shown in FIGS. 13 and 14. When two seat assemblies are provided, the carrier is a double-seat wagon, as shown in FIGS. 1 to 12, 15 and 22.

The seat assembly may comprise a first seat assembly 31. When the accommodation space within the enclosing frame assembly 2 is relatively small and a plurality of seat assemblies cannot be disposed, the first seat assembly 31 may be fixedly disposed on the enclosing frame assembly 2, so that a certain amount of space can be saved. When the enclosing frame assembly 2 is rotated relative to the chassis 1 to cause the carrier to switch between the first use state and the second use state, the first seat assembly 31 rotates synchronously with the enclosing frame assembly 2.

As shown in FIGS. 1 to 4, the first seat assembly 31 comprises a first backrest 311 and a first seat 312. The first backrest 311 is fixedly disposed between the upright rod assemblies on both sides, and the first seat 312 is disposed on the first backrest 311.

When the carrier is in the first use state, the first backrest 311 extends in an up-down direction, the first seat 312 is mounted on the chassis 1, the first seat 312 supports the buttocks of the child, and the first backrest 311 supports the back of the child, as shown in FIGS. 1 to 4. When the carrier is in the second use state, the first backrest 311 extends in a front-rear direction and is sequentially connected with the chassis 1, the first seat 312 is still mounted on the chassis 1, and at this time the first backrest 311 and the chassis 1 jointly serve for lying, as shown in FIGS. 23 and 24.

In this embodiment, the first seat 312 is integrally provided with the first backrest 311, and both the first backrest 311 and the first seat 312 are made of a flexible material, so that when the carrier switches between the first use state and the second use state, the included angle between the first backrest 311 and the first seat 312 can change.

The seat assembly may further comprise a second seat assembly 32, the second seat assembly 32 comprises a second seat 321 and a second backrest 322. Preferably, the second seat 321 is rotatably connected with the second backrest 322, so that the second backrest 322 can be rotated relative to the second seat 321 to be brought close to the chassis 1. The second seat assembly 32 is detachably disposed on the chassis 1, so that when the carrier is switched to the second use state, the second seat assembly 32 can be detached from the chassis 1.

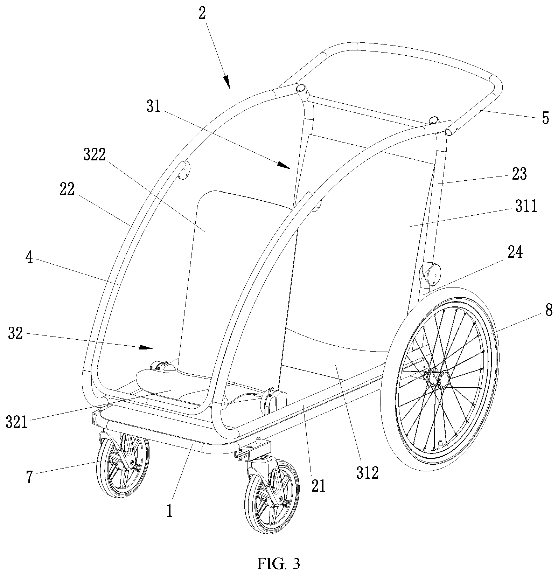

In one embodiment, the second seat assembly 32 is only detachably connected to the chassis 1. The specific connection manner is: plugs are respectively provided on the left and right sides of the second seat 321, and sockets are provided at corresponding positions of the chassis 1, and the detachable connection between the second seat assembly 32 and the chassis 1 is realized through the detachable connection between the plug and the socket on the corresponding side. As shown in FIGS. 3, 4, 11 and 12.

The second seat assembly 32 may be mounted on the chassis 1 in a forward direction, in which case when a child is seated in the second seat assembly 32, the child's face is directed forward, as shown in FIGS. 3, 4, 11 and 12. The second seat assembly 32 may also be mounted on the chassis 1 in a reverse direction, in which case when a child is seated in the second seat assembly 32, the child's face is directed rearward.

Through the detachable connection between the second seat assembly 32 and the chassis 1, the second seat assembly 32 can be mounted on the chassis 1 in different orientations.

In another embodiment, the second seat assembly 32 is rotatably and detachably connected to the chassis 1, as shown in FIGS. 1, 2, 5, 6, and 13 to 18. In this way, after the second seat assembly 32 is connected to the chassis 1, the second seat assembly 32 can be reoriented by being rotated relative to the chassis 1.

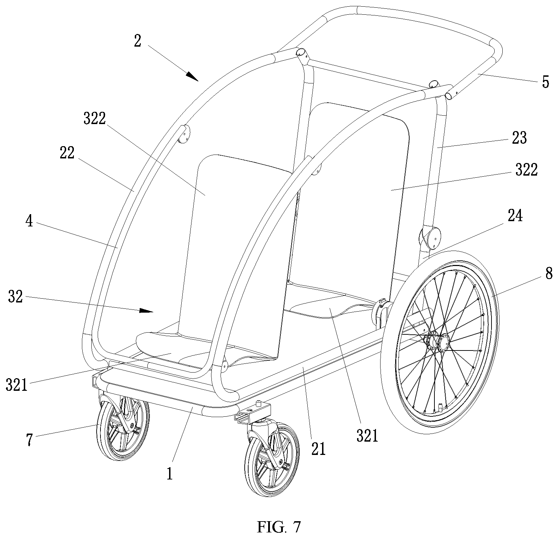

When a plurality of second seat assemblies 32 are provided, the connection manner of each second seat assembly 32 with the chassis 1 may be selected according to the size of the accommodation space within the enclosing frame assembly 2. For example, part of the second seat assemblies 32 may be rotatably and detachably disposed on the chassis 1, and part of the second seat assemblies 32 may be only detachably disposed on the chassis 1, as shown in FIGS. 7 to 10.

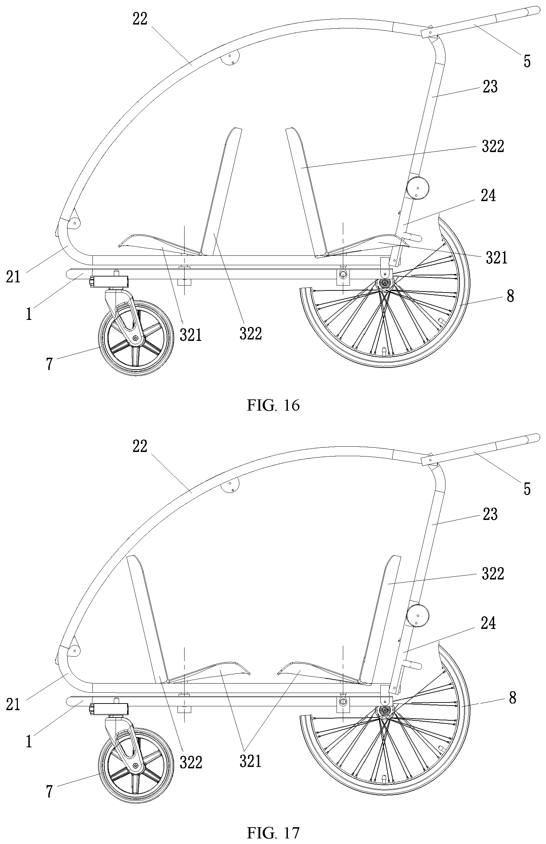

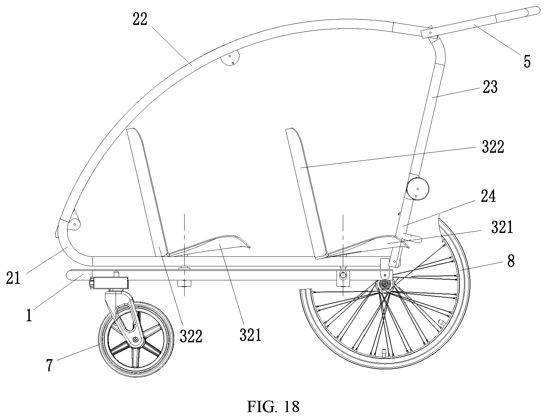

When two seat assemblies are disposed within the enclosing frame assembly 2, the first seat assembly 31 is always in a forward-facing state. The second seat assembly 32 may be in a forward-facing state or in a reverse-facing state. That is, the two seat assemblies may both be in a forward-facing state, as shown in FIG. 15; or both be in a reverse-facing state, as shown in FIG. 18; or one be in a forward-facing state and the other in a reverse-facing state, as shown in FIGS. 16 and 17.

The carrier may further comprise a fabric cover disposed on the enclosing frame assembly 2. When the carrier is in the first use state, the fabric cover is respectively disposed on the top, rear, and left and right sides of the enclosing frame assembly 2, so that the front and bottom of the accommodation space of the enclosing frame assembly 2 are open. In this way, when the carrier is switched from the first use state to the second use state, the bottom of the accommodation space of the enclosing frame assembly 2 is rotated to the front, so as to facilitate the child entering and exiting through the opening opened at the bottom.

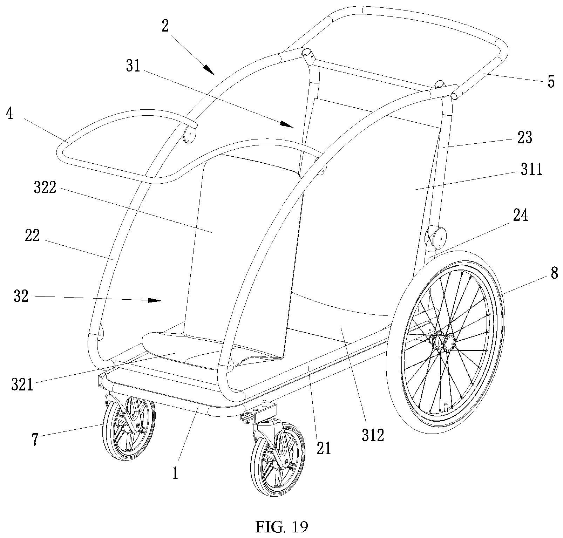

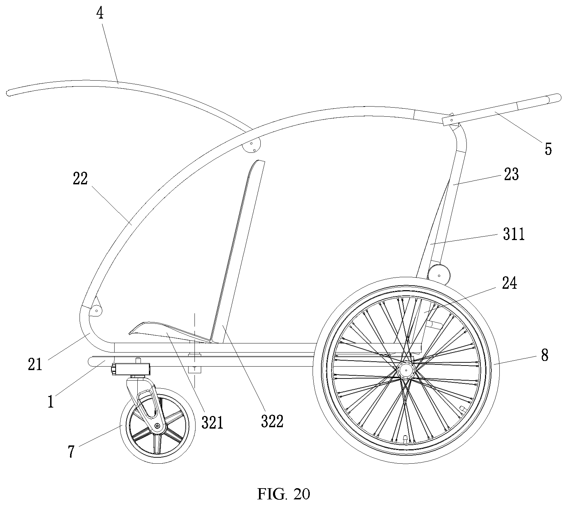

The carrier further comprises a front enclosing rod assembly 4, which is rotatably disposed on the enclosing frame assembly 2. In this embodiment, the front enclosing rod assembly 4 is rotatably disposed on a front portion of the front bracket assembly 22. When the carrier is in the first use state, the front enclosing rod assembly 4 is rotatable relative to the front bracket assembly 22 to a closed position in which it is brought close to the front bracket assembly 22, so that the front enclosing rod assembly 4 is capable of shielding the front of the accommodation space of the carrier, thereby closing the front of the accommodation space of the carrier, as shown in FIGS. 1 to 18. When the carrier is in the first use state, the front enclosing rod assembly 4 is further capable of being rotated upward relative to the front bracket assembly 22 to move away from the front bracket assembly 22, thereby being in an open position, so that the front of the accommodation space of the carrier is opened, facilitating the child to enter and exit, as shown in FIGS. 19 and 20.

The front enclosing rod assembly 4 is further arranged to be slidable relative to the enclosing frame assembly 2, that is, the front enclosing rod assembly 4 is further slidably disposed on the front bracket assembly 22 along the length extension direction of the front bracket assembly 22.

When the carrier is in the first use state, the front enclosing rod assembly 4 cannot slide relative to the front bracket assembly 22, and the front portion of the front enclosing rod assembly 4 does not extend forward beyond the front bracket assembly 22, as shown in FIGS. 1 to 22.

When the carrier is in the second use state, the front enclosing rod assembly 4 slides forward relative to the front bracket assembly 22 to extend to the front of the front bracket assembly 22, and shields above the chassis 1, as shown in FIGS. 23 and 24.

Of course, the front enclosing rod assembly 4 may also be arranged to be only slidable on the front bracket assembly 22 along the length extension direction of the front bracket assembly 22. In this way, when the carrier is in the first use state, the front enclosing rod assembly 4 may be slid relative to the front bracket assembly 22 to be located at the front portion of the front bracket assembly 22, so that the front enclosing rod assembly 4 is capable of shielding the front of the accommodation space of the carrier, so that the accommodation space of the carrier is closed. The front enclosing rod assembly 4 may also be slid rearward relative to the front bracket assembly 22 to be located at the rear portion of the front bracket assembly 22, so that the front of the accommodation space of the carrier is opened. When the carrier is in the second use state, likewise, the front enclosing rod assembly 4 is slid forward relative to the front bracket assembly 22 to extend to the front of the front bracket assembly 22, and shields above the chassis 1.

The carrier further comprises a support structure 5, which is disposed at a position close to the top of the enclosing frame assembly 2. When the carrier is in the first use state, at least part of the support structure 5 extends to a rear side of the enclosing frame assembly 2 so as to form a handle for pushing the carrier, as shown in FIGS. 1 to 22. When the carrier is in the second use state, the support structure 5 is supported between the ground and the enclosing frame assembly 2, so that the stability of the carrier is improved, as shown in FIGS. 23 and 24.

Preferably, the support structure 5 is rotatably mounted on the enclosing frame assembly 2, so that when the carrier is in the second use state, the inclination angle of the rear enclosing frame relative to the chassis 1 can be adjusted, and in the first use state, the position of the handle can be adjusted to facilitate pushing. Moreover, when the carrier is folded, the support structure 5 can also be rotated to be brought close to the enclosing frame assembly 2, so as to reduce the structural size of the carrier after folding.

In this embodiment, one end portion of the support structure 5 is rotatably connected to the other end portion of the front bracket assembly 22.

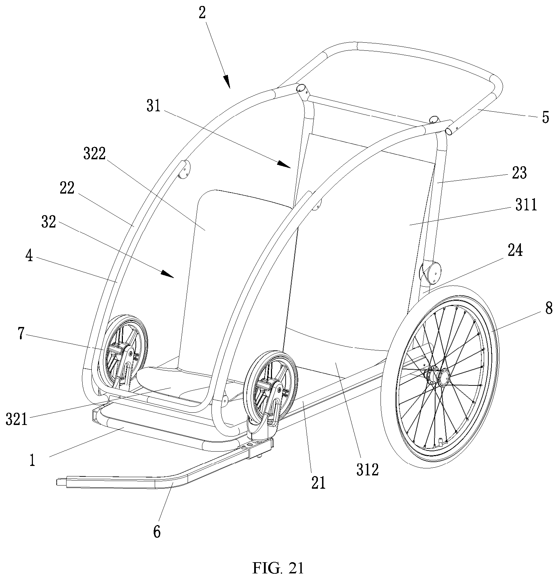

As shown in FIGS. 21 and 22, the carrier further comprises a tow bar 6, by means of which the carrier may be connected to another vehicle such as a bicycle, so that when the bicycle travels, the carrier is pulled to travel synchronously. Preferably, the tow bar 6 is detachably disposed at the front portion of the chassis 1, so that when it is necessary to pull the carrier for travel by another vehicle, the tow bar 6 is connected to the chassis 1, and at this time the front wheel assembly 7 may be reversely mounted on the chassis 1, so that the front wheel assembly 7 is lifted off the ground during the towing of the carrier. When there is no need to pull the carrier for travel by another vehicle, the tow bar 6 may be detached from the chassis 1.

The carrier has an unfolded state and a folded state. When the carrier is in the unfolded state, the carrier may be in the first use state or in the second use state, and may be freely switched between the first use state and the second use state.

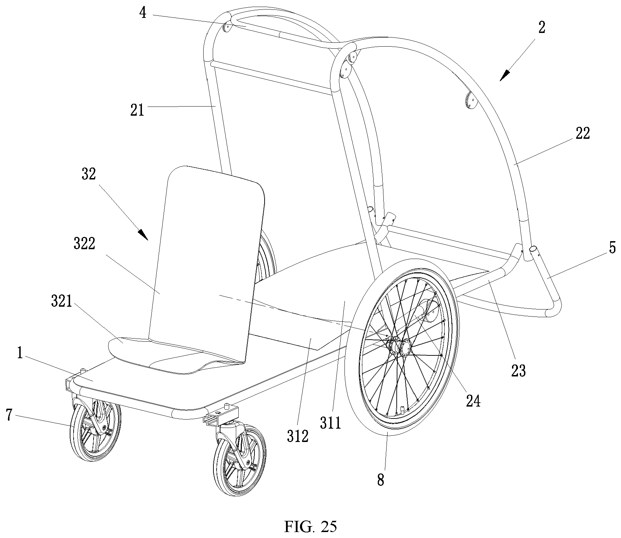

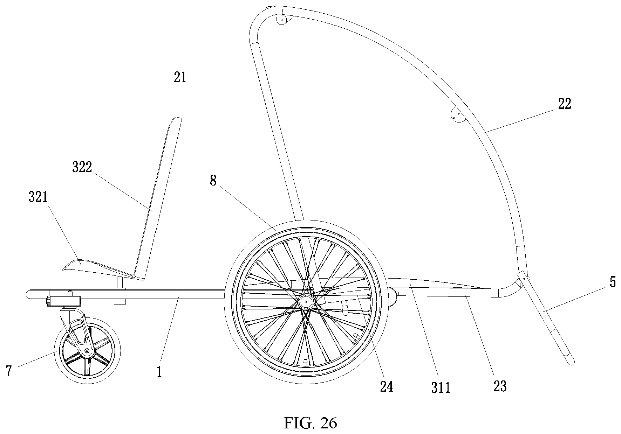

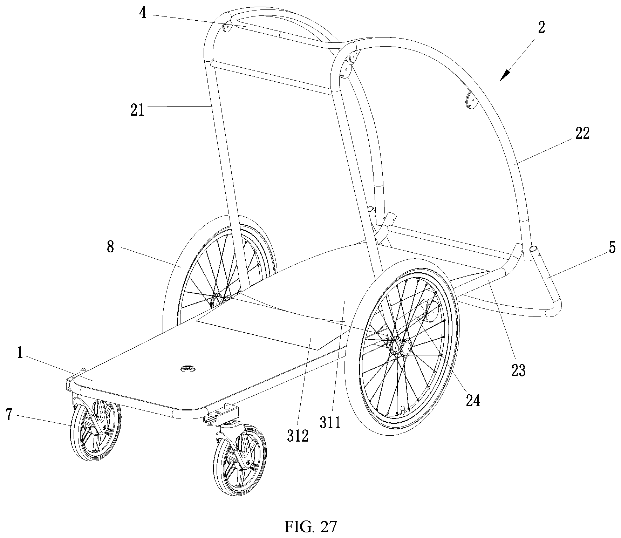

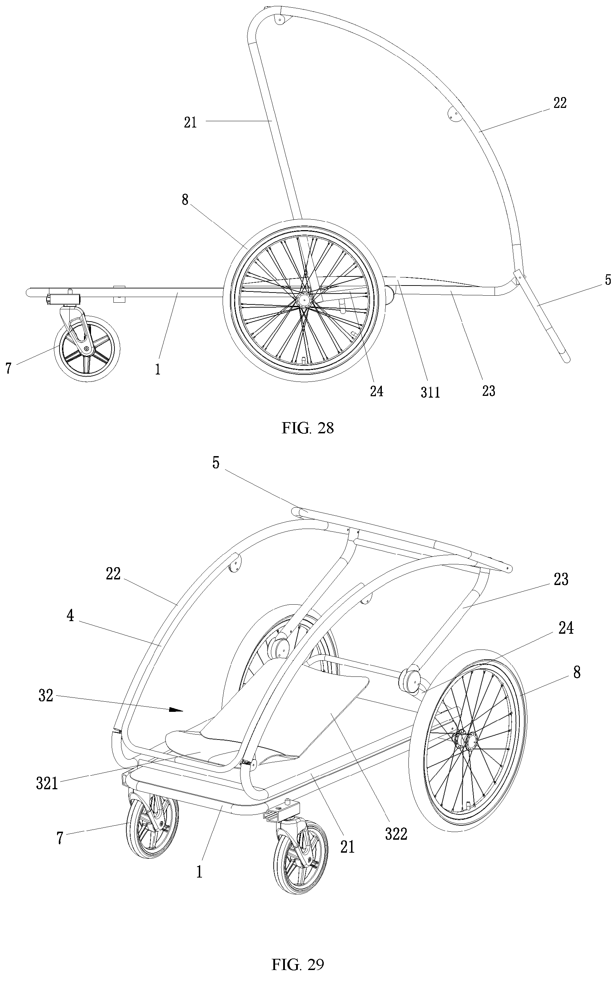

When the carrier is switched from the first use state to the second use state, the connection between the other end portion of the lower enclosing rod assembly 21 and the front portion of the chassis 1 is detached, and the enclosing frame assembly 2 is rotated rearward relative to the chassis 1 as a whole until the bottom of the support structure 5 abuts against the ground, at which time the front wheel assembly 7, the rear wheel assembly 8, and the support structure 5 jointly stand on the ground, as shown in FIGS. 25 and 26. The second seat assembly 32 disposed on the chassis 1 is detached from the chassis 1, as shown in FIGS. 27 and 28. Finally, the front enclosing rod assembly 4 is slid forward relative to the front bracket assembly 22 so that most of it extends to the front of the front bracket assembly 22, and shields above the chassis 1, as shown in FIGS. 23 and 24, at which time the carrier is in the second use state.

When the carrier is switched from the second use state to the first use state, the above steps are reversed.

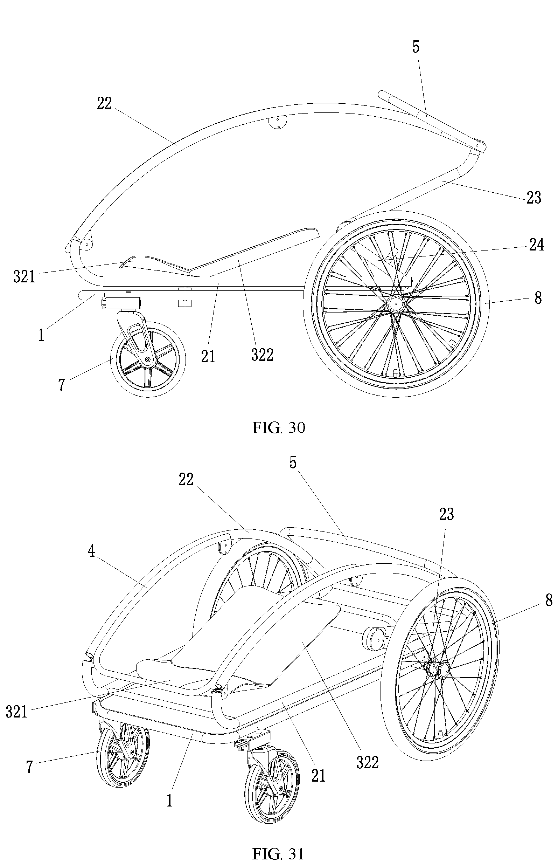

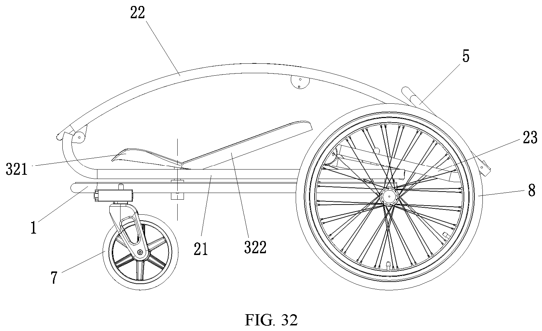

When the carrier is folded, the carrier is first switched to the first use state, and the support structure 5 is rotated forward to be brought close to the front bracket assembly 22; the second backrest 322 of the second seat assembly 32 is rotated to be brought close to the chassis 1; the front bracket assembly 22 is rotated downward relative to the lower enclosing rod assembly 21, such that the upper upright rod assembly 23 and the lower upright rod assembly 24 rotate relative to each other, and such that the lower upright rod assembly 24 is rotated forward relative to the lower enclosing rod assembly 21 to be brought close to the lower enclosing rod assembly 21, and the folding process is shown in FIGS. 29 and 30. Until the front bracket assembly 22, the upper upright rod assembly 23, and the lower upright rod assembly 24 are all brought close to the lower enclosing rod assembly 21, finally folded as shown in FIGS. 31 and 32. After the carrier is folded, the height dimension is greatly reduced, facilitating storage of the carrier when not in use.

### Embodiment 2

In this embodiment, the enclosing frame assembly does not comprise the lower enclosing rod assembly 21. One end portion of the front bracket assembly 22 is rotatably connected to the front portion of the chassis 1, and the connection between the one end portion of the front bracket assembly 22 and the front portion of the chassis 1 is detachable. The lower end portion of the lower upright rod assembly 24 is rotatably connected to the rear portion of the chassis 1.

When the carrier is in the first use state, the one end portion of the front bracket assembly 22 and the front portion of the chassis 1 are in a connected state. After the connection between the one end portion of the front bracket assembly 22 and the front portion of the chassis 1 is detached, the enclosing frame assembly can be rotated rearward as a whole, so that the carrier is switched to the second use state.

The rest is the same as Embodiment 1.

### Embodiment 3

In this embodiment, the connection between the upper end portion of the upper upright rod assembly 23 and the other end portion of the front bracket assembly 22 is detachable. When the carrier is in the first use state, the upper end portion of the upper upright rod assembly 23 and the other end portion of the front bracket assembly 22 are in a connected state. After the connection between the upper end portion of the upper upright rod assembly 23 and the other end portion of the front bracket assembly 22 is detached, the upper upright rod assembly 23 and the lower upright rod assembly 24 are rotated rearward as a whole relative to the lower enclosing rod assembly 21 or the chassis 1, so that the carrier can be switched to the second use state. At this time, the accommodation space of the carrier, the upper upright rod assembly 23 and the lower upright rod assembly 24 jointly form a space for lying or sitting.

In this embodiment, the connection between the fabric cover disposed on the rear portion of the enclosing frame assembly and the other components is detachable, so that when the carrier is switched from the first use state to the second use state, after the connection between the fabric cover and the other components is detached, the fabric cover will no longer obstruct the rotation of the upper upright rod assembly 23 and the lower upright rod assembly 24.

Except that the other end portion of the lower enclosing rod assembly 21 does not need to be detachably connected to the front portion of the chassis 1, the rest is the same as Embodiment 1; or except that the one end portion of the front bracket assembly 22 does not need to be detachably connected to the front portion of the chassis 1, the rest is the same as Embodiment 2.

### Embodiment 4

In this embodiment, the enclosing frame assembly comprises an enclosing frame body and a support plate assembly disposed on the enclosing frame body. One end portion of the support plate assembly is rotatably connected to the rear portion of the chassis 1, and the support plate assembly is detachably connected to the enclosing frame body. When the carrier is in the first use state, the support plate assembly extends in the up-down direction, and is in a connected state with the enclosing frame body, and is located at the rear portion of the enclosing frame body. After the connection between the support plate assembly and the enclosing frame body is detached, the support plate assembly is rotatable rearward relative to the chassis 1. When the carrier is in the second use state, the enclosing frame body is located above the chassis 1, the support plate assembly is rotated to a position behind the chassis 1, and the accommodation space of the carrier together with the support plate assembly jointly form a space for lying or sitting.

The enclosing frame body may comprise a lower enclosing rod assembly 21, a front bracket assembly 22, an upper upright rod assembly 23, and a lower upright rod assembly 24 as in Embodiment 1. Except that the other end portion of the lower enclosing rod assembly 21 does not need to be detachably connected to the front portion of the chassis 1, the rest is the same as Embodiment 1.

Alternatively, the enclosing frame body may also comprise a front bracket assembly 22, an upper upright rod assembly 23, and a lower upright rod assembly 24 as in Embodiment 2. Except that the one end portion of the front bracket assembly 22 does not need to be detachably connected to the front portion of the chassis 1, the rest is the same as Embodiment 2.

In this embodiment, the upper upright rod assembly 23 and the lower upright rod assembly 24 are respectively disposed on the left and right sides, and the support plate assembly is located between the upper upright rod assemblies 23 and the lower upright rod assemblies 24 on the left and right sides. In order to enable folding of the carrier, the support plate assembly comprises two support plates whose one end portions are rotatably connected, and the rotational connection position of the two support plates corresponds to the rotational connection position of the upper upright rod assembly 23 and the lower upright rod assembly 24.

In this embodiment, there is no need to provide a fabric cover at the rear of the accommodation space of the enclosing frame assembly. When the carrier is in the first use state, the rear of the accommodation space is shielded by the support plate assembly.

### Embodiment 5

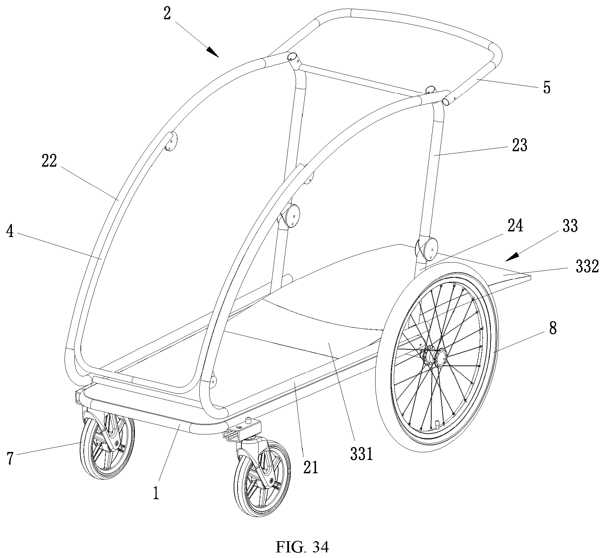

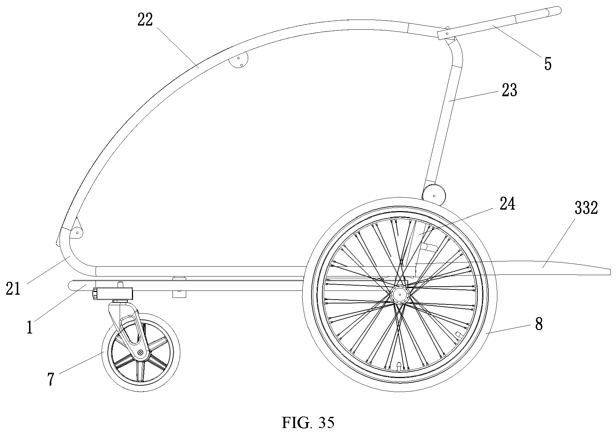

In this embodiment, as shown in FIGS. 34 and 35, the carrier further comprises a third seat assembly 33, and the third seat assembly 33 comprises a third seat 331 and a third backrest 332. The third seat 331 is connected to the rear portion of the chassis 1, and the third backrest 332 is rotatably connected to the third seat 331.

When the carrier is in the first use state, the third backrest 332 extends in the up-down direction, is located in the accommodation space of the carrier, and is located at the rear portion of the accommodation space. When the carrier is in the second use state, the third backrest 332 is rotated relative to the third seat 331 to a position outside the accommodation space of the carrier and is located behind the chassis 1, and the accommodation space of the carrier together with the third backrest 332 jointly form a space for lying or sitting.

In this embodiment, the connection between the fabric cover disposed at the rear portion of the enclosing frame assembly and the other components is detachable, so that when the carrier is switched from the first use state to the second use state, after the connection between the fabric cover and the other components is detached, the fabric cover will no longer obstruct the rotation of the third backrest 332.

In this embodiment, the carrier does not comprise the first seat assembly 31, and a second seat assembly 32 may be provided in the accommodation space of the carrier.

Except that the other end portion of the lower enclosing rod assembly 21 does not need to be detachably connected to the front portion of the chassis 1, the rest is the same as Embodiment 1; or except that the one end portion of the front bracket assembly 22 does not need to be detachably connected to the front portion of the chassis 1, the rest is the same as Embodiment 2.

The above embodiments are provided merely to illustrate the technical concepts and features of the present invention, with the purpose of enabling those familiar with this technology to understand the content of the present invention and implement it accordingly, and are not intended to limit the scope of protection of the present invention. Any equivalent variations or modifications made in accordance with the spirit and essence of the present invention shall be encompassed within the scope of protection of the present invention.

The present invention discloses a multifunctional carrier, comprising a chassis and an enclosing frame assembly disposed on the chassis; the carrier has a first use state and a second use state; when the carrier is in the first use state, the enclosing frame assembly is located above the chassis and, together with the chassis, encloses an accommodation space; when the carrier is in the second use state, at least part of the enclosing frame assembly is moved to be juxtaposed with the chassis and, together with the chassis, forms a load-bearing structure for support. When the multifunctional carrier is in the first use state, children can be carried and goods can be loaded in the accommodation space of the carrier and transported, thereby making it easy and labor-saving for adults when going out, and the structural volume of the carrier is relatively small, which facilitates the use of the carrier. When the carrier is in the second use state, the carrier is used at rest, and relative to the first use state, the load-bearing space of the carrier is enlarged, so that it can be used as other articles such as a bed. This enables the carrier to have multiple use functions, which can greatly improve the utilization rate of the carrier, thereby avoiding waste.

## Claims

1. A multifunctional carrier, wherein the carrier comprises a chassis and an enclosing frame assembly disposed on the chassis; the carrier has a first use state and a second use state; when the carrier is in the first use state, the enclosing frame assembly is located above the chassis and, together with the chassis, encloses an accommodation space; when the carrier is in the second use state, at least part of the enclosing frame assembly is moved to be juxtaposed with the chassis and, together with the chassis, forms a load-bearing structure for support.

2. The multifunctional carrier according to claim 1, wherein the enclosing frame assembly is rotatably mounted on an end portion of the chassis, the enclosing frame assembly is entirely rotatable relative to the chassis, and after being rotated, the enclosing frame assembly is rotated to a position juxtaposed with the chassis.

3. The multifunctional carrier according to claim 2, wherein the enclosing frame assembly is rotatably mounted on a rear end of the chassis and has a rear enclosing frame; in the second use state, the rear enclosing frame is rotated to connect with a plane in which the chassis is located so as to serve as an outward extension of the chassis.

4. The multifunctional carrier according to claim 3, wherein the multifunctional carrier further comprises a support structure disposed on the enclosing frame assembly; in the second use state, the support structure is supported between a ground and the enclosing frame assembly.

5. The multifunctional carrier according to claim 4,wherein the support structure is disposed at a position close to a top of the enclosing frame assembly.

6. The multifunctional carrier according to claim 5, wherein in the first use state, at least part of the support structure extends to a rear side of the enclosing frame assembly so as to form a handle for pushing the multifunctional carrier.

7. The multifunctional carrier according to claim 6,wherein the support structure is rotatably mounted on the enclosing frame assembly so as to adjust an inclination angle of the rear enclosing frame relative to the chassis in the second use state, and to adjust a position of the handle in the first use state.

8. The multifunctional carrier according to claim 1, wherein the carrier further comprises a seat assembly disposed in the accommodation space when the carrier is in the first use state;
the seat assembly comprises a first seat assembly, and the first seat assembly comprises a first backrest disposed on the enclosing frame assembly; when the carrier is in the second use state, the first backrest extends along a plane in which the chassis is located, and is sequentially connected with the chassis.

9. The multifunctional carrier according to claim 8, wherein the enclosing frame assembly comprises a rear enclosing frame having a frame structure, the frame structure comprises a pair of upright rod assemblies and a cross rod connected between the pair of upright rod assemblies, the first backrest comprises a flexible connecting member disposed between the pair of upright rod assemblies, and the flexible connecting member is a fabric cover.

10. The multifunctional carrier according to claim 8, wherein the seat assembly further comprises a second seat assembly, and the second seat assembly is rotatably and detachably disposed on the chassis; or, the second seat assembly is detachably disposed on the chassis.

11. The multifunctional carrier according to claim 10, wherein the second seat assembly comprises a second seat and a second backrest whose lower portion is rotatably connected to the second seat, and the second seat is rotatably and detachably, or detachably, connected to the chassis;
when the carrier is in the first use state, orientations of the first seat assembly and the second seat assembly are the same or opposite.

12. The multifunctional carrier according to claim 1, wherein the carrier further comprises a front enclosing rod assembly rotatably disposed on the enclosing frame assembly; when the carrier is in the first use state, the front enclosing rod assembly is rotatable to a closed position in which the front enclosing rod assembly is brought close to the enclosing frame assembly, and in the closed position, the front enclosing rod assembly shields a front of the accommodation space of the carrier; the front enclosing rod assembly is rotatable to an open position, and in the open position, the front enclosing rod assembly is rotated in a direction of opening the accommodation space.

13. The multifunctional carrier according to claim 12, wherein the front enclosing rod assembly is further arranged to be slidable relative to the enclosing frame assembly; when the carrier is in the first use state, the front enclosing rod assembly cannot slide relative to the enclosing frame assembly; when the carrier is in the second use state and the enclosing frame assembly has been entirely rotated to a position behind the chassis, the front enclosing rod assembly slides forward relative to the enclosing frame assembly to extend outside the enclosing frame assembly, and shields above the chassis.

14. The multifunctional carrier according to claim 1, wherein the carrier further comprises a front enclosing rod assembly slidably disposed on the enclosing frame assembly; when the carrier is in the first use state, the front enclosing rod assembly is capable of sliding relative to the enclosing frame assembly so as to open or close a front of the accommodation space of the carrier; when the carrier is in the second use state and the enclosing frame assembly has been entirely rotated to a position behind the chassis, the front enclosing rod assembly slides forward relative to the enclosing frame assembly to extend outside the enclosing frame assembly, and shields above the chassis.

15. The multifunctional carrier according to claim 1, wherein the enclosing frame assembly comprises a lower enclosing rod assembly, a front bracket assembly, an upper upright rod assembly, and a lower upright rod assembly; one end portion of the lower enclosing rod assembly is rotatably connected to a rear portion of the chassis, the other end portion of the lower enclosing rod assembly is detachably connected to a front portion of the chassis; one end portion of the front bracket assembly is rotatably connected to the other end portion of the lower enclosing rod assembly, the other end portion of the front bracket assembly is rotatably connected to an upper end portion of the upper upright rod assembly; a lower end portion of the upper upright rod assembly is rotatably connected to an upper end portion of the lower upright rod assembly, a lower end portion of the lower upright rod assembly is rotatably connected to the one end portion of the lower enclosing rod assembly; when the carrier is in the first use state, the other end portion of the lower enclosing rod assembly and the front portion of the chassis are in a connected state; when the carrier is in the second use state, the connection between the other end portion of the lower enclosing rod assembly and the front portion of the chassis is released, and the enclosing frame assembly is entirely rotated to a position behind the chassis.

16. The multifunctional carrier according to claim 1, wherein the enclosing frame assembly comprises a front bracket assembly, an upper upright rod assembly, and a lower upright rod assembly; one end portion of the front bracket assembly is rotatably connected to a front portion of the chassis, and the connection between the front bracket assembly and the front portion of the chassis is detachable; the other end portion of the front bracket assembly is rotatably connected to an upper end portion of the upper upright rod assembly, a lower end portion of the upper upright rod assembly is rotatably connected to an upper end portion of the lower upright rod assembly, and a lower end portion of the lower upright rod assembly is rotatably connected to a rear portion of the chassis; when the carrier is in the first use state, the one end portion of the front bracket assembly and the front portion of the chassis are in a connected state; when the carrier is in the second use state, the connection between the front bracket assembly and the front portion of the chassis is released, and the enclosing frame assembly is entirely rotated to a position behind the chassis.

17. The multifunctional carrier according to claim 1, wherein the carrier further comprises a front wheel assembly disposed on a bottom front portion of the chassis and a rear wheel assembly disposed on a bottom rear portion of the chassis.

18. A multifunctional carrier, wherein the carrier comprises a chassis, an enclosing frame assembly disposed on the chassis and having an accommodation space, and a third seat assembly; the third seat assembly comprises a third seat connected to a rear portion of the chassis and a third backrest rotatably connected to the third seat; the carrier has a first use state and a second use state; when the carrier is in the first use state, the third backrest extends in an up-down direction, and the third backrest is located in the accommodation space of the enclosing frame assembly; when the carrier is in the second use state, the third backrest is rotated relative to the seat to a position outside the accommodation space of the enclosing frame assembly and is located behind the chassis.
